# EUROPÄISCHE PATENTSCHRIFT

(11) **EP 2 326 528 B1**
(45) Veröffentlichungstag und Bekanntmachung des Hinweises auf die Patenterteilung: **22.01.2014**
(21) Anmeldenummer: 09782465.0
(22) Anmeldetag: 01.09.2009
(51) Int. Cl.: B60L 11/18, H02J 3/38

(54) **SYSTEM ZUM ORTSUNABHÄNGIGEN STROMBEZUG UND/ODER ZUR ORTSUNABHÄNGIGEN STROMEINSPEISUNG EINER MOBILEN SPEICHER- UND VERBRAUCHSEINHEIT**
SYSTEM FOR THE LOCATION-INDEPENDENT POWER INTAKE OF AND/OR FOR THE LOCATION-INDEPENDENT POWER FEED BY A MOBILE STORAGE AND CONSUMPTION UNIT
SYSTÈME DE RAVITAILLEMENT EN COURANT D'UNE UNITÉ MOBILE D'ACCUMULATION ET DE CONSOMMATION ET/OU DE RÉINJECTION DE COURANT DANS LE RÉSEAU À PARTIR DE CETTE UNITÉ MOBILE, INDÉPENDAMMENT DU LIEU

(30) Priorität: 16.09.2008 DE 102008044526
(43) Veröffentlichungstag der Anmeldung: 01.06.2011
(73) Patentinhaber: EnBW Energie Baden-Württemberg AG, 76131 Karlsruhe (DE)
(72) Erfinder: FREY, Hellmuth, 76227 Karlsruhe (DE); HEIß, Jürgen, 76229 Karlsruhe (DE); KESSLER, Alois, 75417 Mühlacker (DE); MÜNCH, Wolfram, 76593 Gernsbach (DE); NIEHAUS, Thorsten, 76185 Karlsruhe (DE); WALCH, Lars, 76307 Karlsbad (DE)
(74) Vertreter: Meyer-Dulheuer, Karl-Hermann
(86) Internationale Anmeldenummer: PCT/EP2009/061283
(87) Internationale Veröffentlichungsnummer: WO 2010/031687

(56) Entgegenhaltungen:
- WO-A-2008/073453
- US-A1- 2002 132 144
- US-A1- 2007 282 495
- US-A1- 2008 136 371

## Beschreibung

Die Erfindung betrifft ein Verfahren und eine Vorrichtung zum ortsunabhängigen Strombezug und/oder zur ortsunabhängigen Stromeinspeisung einer mobilen Speicher- und Verbrauchseinheit an einer ortsfesten Stromtankstelle, wobei eine Vielzahl von Stromtankstellen über Stromleitungen mindestens eines Stromverteilnetzbetreibers mit Strom von mindestens einem Stromlieferanten versorgt werden.

Zur Abdeckung des wachsenden Energiebedarfs von elektrisch angetriebenen Fahrzeugen werden u.a. öffentlich zugängliche kostenpflichtige oder kostenlose Stromtankstellen genutzt. Derartige Stromtankstellen stellen dabei die für das Aufladen eines Akkumulators eines Elektrofahrzeugs notwendige elektrische Energie bereit. So beschreibt die US-A 4,052,655 A1 eine Stromladeanlage mit mehreren jeweils autark arbeitenden Zapfsäulen, die jeweils mit mindestens einer Steckdose zum Anstecken eines Ladekabels und einer diesem zugeordneten mechanischen Sicherung versehen sind und denen jeweils eine Energiemengenzähleinrichtung und den Strompreis ermittelnde Recheneinrichtung zugeordnet sind. Die Bezahlung erfolgt dabei durch Münzeinwurf, was eine aufwändige Diebstahlsicherung erforderlich macht und einen hohen Wartungs- und Überwachungsaufwand bedingt.

Das Aufladen von Automobilen an jeweils autark arbeitenden, an das Stromnetz angeschlossenen Parkuhren während der Parkzeit ist aus der DE 41 01 053 A1 bekannt, bei der die abgenommene Strommenge durch Geldmünzen oder mit einer Scheckkarte gezahlt wird. Auch die DE 295 05 733 U1 beschreibt ein Ladesystem für Elektroautos mit einem Scheckkarten- oder Münzautomaten. Dabei stellt sich das Problem, dass diverse Manipulationsmöglichkeiten bestehen.

Auch die DE 42 13 414 C2 beschreibt eine Stromladeanlage mit mehreren Stromzapfsäulen, die jeweils mit wenigstens einer Steckdose zum Anstecken eines Ladekabels und mit einer diesem zugeordneten mechanischen Sicherung versehen sind und denen jeweils eine Energiemengenzähleinrichtung und eine den Strompreis ermittelnde Recheneinrichtung zugeordnet sind, wobei ein zentraler Terminal vorgesehen ist, der die mit den Energiemengenzähleinrichtungen aller Stromzapfsäulen signalleitungsverknüpften Recheneinrichtungen enthält und mit den betriebsnotwendigen Komponenten aller Stromzapfsäulen signalleitungsverknüpft ist. Weiterhin ist zwischen dem Terminal und jeder Stromzapfsäule jeweils eine dieser zugeordneten Interfaceeinrichtungen eingeschaltet, die eine den Betriebszustand einer mechanischen Sicherung kontrollierende Sicherungseinrichtung, eine bei Funktionsstörungen ansprechende Sicherungseinrichtung und eine Fehlerströme überwachende Sicherungseinrichtung enthält. Bei dieser Stromtankstelle enthält die Kontrolleinrichtung insbesondere eine Magnetkarten-Leseeinrichtung für Identifikationskarten. Auch eine derartige Vorrichtung muss sehr komplex aufgebaut sein und kann eine missbräuchliche Benutzung nicht verhindern.

Mit steigender Anzahl von Elektrofahrzeugen in den Innenstädten ergibt sich die Problematik, dass eine große Anzahl unterschiedlicher Benutzer eine Stromtankstelle beanspruchen. Es sollte jedoch möglichst eine benutzergerechte Abrechnung erfolgen, da im Gegensatz zu betriebsinternen Stromparkplätzen die Abrechnung nicht von einem einzigen Betreiber beglichen werden muss. So ist insbesondere die Möglichkeit nicht auszuschließen, dass einzelne Energieverbraucher bemüht sind, die gelieferte Energiemenge nicht selbst zu bezahlen. Vor diesem Hintergrund beschreibt die DE 44 14 008 C2 eine Anordnung zur Abgabe von elektrischer Energie an Kraftfahrzeuge mit einem Anschluss an eine elektrische Energieversorgung, einer Kommunikationseinheit, welche eine Eingabevorrichtung zur Bestätigung durch den Benutzer aufweist sowie eine Ausgabevorrichtung für Informationen an den Benutzer, einer Freigabeschaltung, die in Abhängigkeit von der Eingabe des Benutzers die Energieabgabe freischaltet, wobei erst nach einem Abgleich von Informationen aus der Eingabevorrichtung mit Informationen, die als Identifizierungsdaten vom Kraftfahrzeug zu der Freigabeschaltung übertragen werden, eine Freigabe der Energieabgabe erfolgt. Dabei wird insbesondere ein Kartenlesegerät benutzt, wobei eine diesem zugeordnete Karte Angaben über den Benutzer und über das Kraftfahrzeug enthält. Auch eine solche Vorrichtung ist mindestens mit einem Kartenlesegerät ausgestattet, sodass ein Missbrauch beim Strombezug nicht ausgeschlossen werden kann. Weiterhin ermöglicht diese bekannte Vorrichtung auch keine wirkliche benutzerspezifische Abrechnung bei unterschiedlichen Stromlieferanten.

Der vorliegenden Erfindung liegt deshalb die Aufgabe zu Grunde, ein Verfahren und ein System zum ortsunabhängigen Strombezug und/oder zur ortsunabhängigen Stromeinspeisung einer mobilen Speicher- und Verbrauchseinheit bereitzustellen, welche einen überwachungslosen Betrieb, eine hohe Betriebs- und Funktionssicherheit sowie einen hohen Bedienungskomfort aufweist und insbesondere die missbräuchliche Benutzung verhindert. Weiterhin soll eine benutzerspezifische Abrechnung mit den jeweiligen Stromlieferanten möglich sein.

Diese der Erfindung zugrunde liegende Aufgabe wird durch ein Verfahren nach Anspruch 1 gelöst

Dieses Verfahren ermöglicht es einem Nutzer der mobilen Speicher- und Verbrauchseinheit an einer beliebigen Stromtankstelle mit hohem Bedienungskomfort elektrische Energie zu beziehen oder in ein Stromnetz einzuspeisen, wobei sofort eine wunschgemäße Abrechnung über einen ausgewählten Stromlieferanten erfolgen kann. Ein derartiger Strombezug bzw. eine derartige Stromeinspeisung bietet damit ähnlich gestaltete Nutzungsmöglichkeiten, wie sie bisher lediglich von festen Heimanschlüssen bekannt waren.

Gemäß einer bevorzugten Weiterentwicklung des Verfahrens erfolgt bei der räumlichen Annäherung der mobilen Speicher- und Verbrauchseinheit an eine ortsfeste Stromtankstelle ein automatischer Verbindungsaufbau der ersten Kommunikationsverbindung zwischen der Speicher- und Verbrauchseinheit und der Stromtankstelle. Diese Ausgestaltung erlaubt dem Nutzer der Speicher- und Verbrauchseinheit, den Strombezug oder die Stromeinspeisung ohne Zeitverzögerung beginnen zu können.

Die Speicher- und Verbrauchseinheit kann im Sinne der vorliegenden Erfindung vorzugsweise ein Fahrzeug mit mindestens einem elektrischen Antrieb sein. Unter einem derartigen Elektrofahrzeug wird ein Fahrzeug mit mindestens einem elektrischen Antrieb verstanden. Dies beinhaltet auch die Klasse der Fahrzeuge, die nur ergänzend mit einem elektrischen Antrieb ausgestattet sind, wie beispielsweise Hybridfahrzeuge. Wesentliches Merkmal eines Elektrofahrzeuges in diesem Sinne ist die Notwendigkeit eines elektrischen Energiespeichers, also einer Batterie bzw. eines Akkumulators. Durch Anbindung an ein elektrisches Versorgungsnetz kann dieser Akkumulator regelmäßig aufgeladen werden. Die Speicher- und Verbrauchseinheit im Sinne der vorliegenden Erfindung kann weiterhin auch eine Vorrichtung zur Bereitstellung von elektrischer Energie sein. Dabei können insbesondere auch die oben genannten Elektrofahrzeuge, also deren Akkumulatoren, zum Einspeisen von elektrischer Energie genutzt werden. Es kann weiterhin zweckmäßig sein, das Elektrofahrzeug dazu zusätzlich mit einer Vorrichtung zur Gewinnung von elektrischer Energie zu kombinieren, also beispielsweise mit einer auf dem Dach des Elektrofahrzeugs montierten Fotovoltaikanlage.

Als Stromtankstelle wird im Sinne dieser Erfindung eine Ladestation für eine mobile Speicher- und Verbrauchseinheit verstanden. Eine solche Stromtankstelle kann sich dazu im privaten Besitz in dessen Hausnetz befinden oder im Besitz eines Dritten an einem, ggf. öffentlich, für den Fahrzeugeigentümer zugänglichen Ort befinden.

Gemäß einer zweckgemäßen Weiterbildung trägt auch die Speicher- und Verbrauchseinheit einen Stromzählers zur Erfassung der von der Stromtankstelle entgegengenommenen oder der an die Stromtankstelle abgegebenen Strommenge. Dieser Stromzähler kann dem Nutzer der Speicher- und Verbrauchseinheit dazu dienen, die von der Stromtankstelle empfangene oder die eingespeiste Energiemenge nachzuvollziehen. Die Stromzähler im Sinne dieser Erfindung können beliebig gestaltet sein, wobei, insbesondere für den Stromzähler der Stromtankstelle, lediglich sichergestellt sein muss, dass die vom Stromzähler ermittelten Werte auch automatisch an den Abrechnungsserver übermittelbar, insbesondere digitalisiert, sind.

Gemäß einer vorteilhaften Weiterentwicklung des Verfahrens erfolgt die erste Kommunikationsverbindung kabelgebunden, insbesondere über das Ladekabel unter Nutzung von Powerline Communication oder Digitalstrom (Informationsübertragung im Basisband in der Nähe des Nulldurchganges des Wechselstromes) oder über ein separates Datenkabel, oder über Funk, insbesondere über WLAN, ZIGBee, Bluetooth, Transpondertechnologie oder RFID. Dabei kann die zweite Kommunikationsverbindung zwischen der Stromtankstelle und dem Abrechnungsserver kabelgebunden, vorzugsweise über DSL, ISDN, Festnetztelefon oder Powerline Communication, Digitalstrom oder über Funk erfolgen. Vorzugsweise wird die zweite Kommunikationsverbindung nach einer der beiden genannten Möglichkeiten über Funk als GSM, GPRS, UMTS, WiMAX, Funkrundsteuerung oder Paging ausgestaltet. Die letztgenannten Funkübertragungssysteme haben den Vorteil, dass auch gegebenenfalls größere Reichweiten möglich sind.

Gemäß einer zweckdienlichen Weiterentwicklung werden mithilfe eines an der Speicher- und Verbrauchseinheit angebrachten Ortungssystems Daten über den Aufenthaltsort der Speicher- und Verbrauchseinheit über Funk an eine Stromtankstelle oder direkt zum Abrechnungsserver übertragen.

Bei einer vorteilhaften Weiterentwicklung des Verfahrens sind auf dem Abrechnungsserver außerdem Daten zu mindestens einem Übertragungsnetzbetreiber hinterlegt. Es kann weiter zweckdienlich sein, auch Daten zu mindestens einem Stromverteilnetzbetreiber und/oder Daten zu mindestens einem Stromlieferanten zu hinterlegen.

Das Verfahren hat insbesondere den Vorteil, dass der Bezug und die Einspeisung von Strom durch eine oder mehrere Speicher- und Verbrauchseinheiten an einer der Stromtankstellen zeitlich und/oder preislich gesteuert und/oder aufgrund von Regelstrategien zur Optimierung der Netzstabilität des Stromverteilnetzbetreibers erfolgen kann.

Gemäß einer zweckdienlichen Weiterentwicklung werden über die erste und/oder die zweite Kommunikationsverbindung (K1, K2) Transaktionsdaten übermittelt. Die Transaktionsdaten können dabei insbesondere Strompreise, Strompreis-Ober- und Untergrenzen oder Strommengen sein, denen jeweils ein bestimmter Zeitpunkt oder Zeitraum zugeordnet werden kann.

Bei einer vorteilhaften Weiterentwicklung des Verfahrens können die Transaktionsdaten über ein Eingabegerät an der Stromtankstelle erfasst werden und über ein Display an der Stromtankstelle angezeigt werden.

Die Abrechnung des Strombezugs an der Stromtankstelle bzw. der entsprechenden Stromeinspeisung kann vorzugsweise auf dem Abrechnungsserver mithilfe einer Software erfolgen. Ein solches Computerprogramm kann dazu einen oder mehrere der oben genannten Verfahrensschritte ausführen.

Auch ein Datenträger mit dem genannten Computerprogramm ist Gegenstand der vorliegenden Erfindung.

Das erfindungsgemäße Verfahren kann insbesondere mithilfe eines Systems zum ortsunabhängigen Strombezug oder zur ortsunabhängigen Stromeinspeisung einer mobilen Speicher- und Verbrauchseinheit an einer ortsfesten Stromtankstelle durchgeführt werden, das die folgenden Komponenten enthält, wobei
- eine Vielzahl von Stromtankstellen über Stromleitungen mindestens eines Stromverteilnetzbetreiber mit mindestens einem Stromlieferanten verbunden sind;
- die Stromtankstelle einen Stromzähler mit einer Zählernummer trägt;
- die Stromtankstelle mindestens ein Mittel zur Entgegennahme einer Kennnummer der Speicher- und Verbrauchseinheit besitzt;
- zwischen der Speicher- und Verbrauchseinheit und der Stromtankstelle eine erste Kommunikationsverbindung besteht;
- eine zweite Kommunikationsverbindung zwischen der Stromtankstelle und/oder der Speicher- und Verbrauchseinheit und dem Abrechnungsserver besteht;
- auf einem zentralen Abrechnungsserver in einer Datenbank mindestens Daten zu der Speicher- und Verbrauchseinheit, der Kennnummer, dem Stromlieferanten, dem Stromzähler, der Zählernummer und dem Verteilnetzbetreiber hinterlegt sind und
- an der Stromtankstelle ein Mittel zu deren Freischaltung nach einer Anweisung des Abrechnungsservers vorhanden ist.

Gemäß einer zweckmäßigen Weiterentwicklung des Systems kann das an der Stromtankstelle vorgesehene Mittel zur Entgegennahme einer Kennnummer der Speicher- und Verbrauchseinheit mindestens eine der Speicher- und Verbrauchseinheit eindeutig zugeordnete Kennnummer über Funk oder kabelgebunden empfangen. Ebenfalls möglich ist gemäß einer zweckmäßigen Weiterentwicklung des Systems die Kennummer mittels der beim Digitalstromverfahren implementierten Identifikationsfunktion auszutauschen. Weiterhin ist es von Vorteil, wenn die eindeutig zugeordnete Kennnummer über ein Eingabegerät vom Nutzer der Speicher- und Verbrauchseinheit erfasst wird. Dazu kann das Eingabegerät aus einem Lesegerät bestehen und die Kennnummer auf einem portablen Datenspeichermedium, vorzugsweise einer Kreditkarte, einem Transponderchip oder einem RFID, des Nutzers der Speicher- und Verbrauchseinheit gespeichert sein.

Die Ausgestaltung eines Stromzählers an der mobilen Speicher- und Verbrauchseinheit und einer Steuervorrichtung für eine Stromtankstelle sind jeweils Gegenstand der gleichzeitig eingereichten deutschen Patentanmeldungen 10 2008 044 527.4 bzw.10 2008 044 528.2.

Weitere Vorteile und Einzelheiten des erfindungsgemäßen Verfahrens bzw. des Systems ergeben sich aus den anhand der Zeichnung beschriebenen und die Erfindung nicht einschränkenden Ausführungsbeispielen.

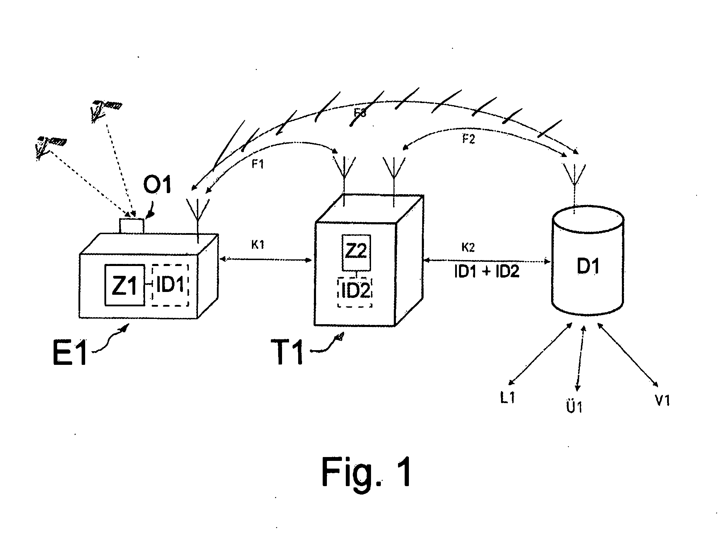

Dabei zeigt Fig. 1 eine abstrakte Darstellung des Verfahrens zum ortsunabhängigen Strombezug und/oder zur ortsunabhängigen Stromeinspeisung.

Gemäß der Fig. 1 ist die Anordnung eines Elektrofahrzeuges an einer Stromtankstelle, welche in ein Abrechnungssystem integriert ist, gemäß einem Ausführungsbeispiel abstrakt dargestellt. Die mobile Speicher- und Verbrauchseinheit E1 ist bei diesem Ausführungsbeispiel ein Elektrofahrzeug. Die ortsfeste Stromtankstelle T1, ausgewählt aus einer Vielzahl von zeichnerisch nicht dargestellten Stromtankstellen T1 - Tn, ist über Stromleitungen mit mindestens einem (Strom-)Verteilnetzbetreiber V1 verbunden und wird über diese Stromleitungen mit elektrischem Strom mindestens eines Stromlieferanten L1 versorgt. Beim Annähern des Elektrofahrzeuges E1 an die Stromtankstelle T1 wird zwischen dem Elektrofahrzeug E1 und der Stromtankstelle T1 eine erste Kommunikationsverbindung K1 hergestellt. Diese erste Kommunikationsverbindung K1 ist bei dem dargestellten Ausführungsbeispiel gemäß Fig. 1 als Funkverbindung F1 ausgestaltet. Da diese Funkverbindung F1 lediglich für relativ kurze Distanzen ausgelegt sein muss, eignen sich hierfür insbesondere WLAN, ZIGBee, Bluetooth, Transpondertechnologie oder RFID. Nach Herstellung der ersten Kommunikationsverbindung K1 wird ein Datenpaket über eine zweite Kommunikationsverbindung K2 an ein Datenmanagementsystem (Abrechnungsserver) D1 übermittelt, wobei dieses Datenpaket mindestens die Kennnummer ID1 und die Zählernummer ID2 enthält. Dem Elektrofahrzeug E1 ist eine eindeutige Kennnummer ID1 zugeordnet und die Stromtankstelle T1 trägt einen Stromzähler Z2 mit einer Zählernummer ID2. Auf dem Abrechnungsserver D1 kann nun eine Zuordnung des Elektrofahrzeuges E1 mithilfe der Kennnummer ID1 zu einem Stromlieferanten L1 sowie eine Zuordnung des Stromzählers Z2 mithilfe der Zählernummer ID2 zu einem Verteilnetzbetreiber V1 mithilfe der auf dem Abrechnungsserver D1 dazu hinterlegten Daten erfolgen. Nach einer entsprechenden positiven Zuordnung kann die Stromtankstelle T1 mithilfe der zweiten Kommunikationsverbindung K2 freigeschaltet werden. Die zweite Kommunikationsverbindung K2 zwischen der Stromtankstelle T1 und dem Abrechnungsserver D1 kann kabelgebunden, insbesondere über DSL, ISDN, Festnetztelefon oder Powerline Communication, oder über Funk F2 erfolgen.

Die entsprechende Funkverbindung F2 muss für größere Entfernungen ausgelegt sein, sodass insbesondere GSM, GPRS, UMTS, WiMAX, Funkrundsteuerung oder Paging in Frage kommen.

Nach der Freischaltung der Stromtankstelle T1 kann nun die Abgabe von Strom an das Elektrofahrzeug E1 oder die Einspeisung von Strom von dem Elektrofahrzeug E1 an die Stromtankstelle T1 über ein Ladekabel oder über eine berührungsfreie induktive Stromübertragung erfolgen. Die letztgenannte Möglichkeit der berührungsfreien induktiven Stromübertragung zwischen dem Elektrofahrzeug E1 und der Stromtankstelle T1 hat den besonderen Vorteil, dass bei der Energieübertragung nach dem erfindungsgemäßen Verfahren überhaupt keine physische Verbindung zwischen dem Elektrofahrzeug E1 und der Stromtankstelle T1 notwendig ist, wenn auch die erste Kommunikationsverbindung K1 als Funkverbindung F1 ausgestaltet ist. Daraus ergibt sich für den Nutzer des Elektrofahrzeuges E1 ein besonders hoher Bedienungskomfort.

Nach Beendigung der Energieübertragung kann der von dem Elektrofahrzeug E1 an der Stromtrankstelle T1 entnommene oder eingespeiste Strombetrag über die Kommunikationsverbindung K2 an den Abrechnungsserver D1 übermittelt werden.

Der Abrechnungsserver D1 empfängt also über die Kommunikationsverbindungen K2 und/oder F2 Messdaten von den Stromzählern Z1 und Z2, welche direkt dem jeweiligen Elektrofahrzeug E1 und der Stromtankstelle T1 zugeordnet werden können. Auf dem Abrechnungsserver ist dazu hinterlegt, welchem Stromlieferanten der Zähler Z1 mit der Kennnummer ID1 zugeordnet ist und welchem Verteilnetzbetreiber V1 der Zähler Z2 mit der Zählernummer ID2 zugeordnet ist. Das ermöglicht erstmals die kundenspezifische Abrechnung der aus dem Stromnetz entnommenen Menge elektrischer Energie bei einem sich örtlich dynamisch verhaltenen Energieverbrauch. Als Lieferant elektrischer Energie wird im Sinne dieser Erfindung ein Energieversorgungsunternehmen verstanden, welches eine Geschäftsbeziehung mit dem Besitzer eines Elektrofahrzeuges E1 zur Belieferung mit elektrischer Energie unterhält. Mithilfe der Stromtankstelle T1 und dem Abrechnungsserver D1 wird es für den Stromlieferanten L1 erstmals möglich, das Elektrofahrzeug E1 abzurechnen, unabhängig davon, welche Stromtankstelle T1 dieses aufsucht wobei die Verbrauchsdaten über die zweite Kommunikationsverbindung K2 bzw. F2 von der Stromtankstelle T1 zum Abrechnungsserver D1 gelangen.

Als Verteilnetzbetreiber V1 wird ein Energieversorgungsunternehmen verstanden, dessen Geschäftszweck im Aufbau und Betrieb des Strom-Verteilnetzes besteht. In diesem Verteilnetz befindet sich die Stromtankstelle T1 an einem definierten Ort. Der Verteilnetzbetreiber V1 hat mit dem Stromlieferanten L1 eine vertragliche Beziehung, die es dem Stromlieferanten L1 erlaubt, flexibel innerhalb des Gebietes des Verteilnetzbetreibers beliebige Stromtankstellen T1 - Tn dazu zu nutzen, den Besitzer des Elektrofahrzeuges E1 mit elektrischer Energie zu beliefern. Beim Strombezug fällt ein Nutzungsentgelt an, welches der Kunde auf Basis des Stromzählers Z2 über den Stromlieferanten L1 an den Verteilnetzbetreiber V1 bezahlt. Bei der Einspeisung aus dem Elektrofahrzeug E1 in das Netz des Verteilnetzbetreibers V1 erhält der Besitzer des Elektrofahrzeuges E1 eine Einspeisevergütung vom Verteilnetzbetreiber V1, die ebenfalls auf Basis des Zählers Z2 errechnet wird.

Als Übertragungsnetzbetreiber Ü1 wird ein Energieversorgungsunternehmen verstanden, dessen Geschäftszweck in dem Aufbau und Betrieb des Übertragungsnetzes besteht. Als weitere Kernaufgabe, die sich der Übertragungsnetzbetreiber Ü1 mit dem Verteilnetzbetreiber V1 teilt, wird die Sicherstellung der Netzstabilität durch ein entsprechendes Angebot von Regelenergie betrieben. Diese Regelenergie kann situationsabhängig durch das Elektrofahrzeug E1 in das Netz des Verteilnetzbetreibers V1 eingespeist werden und wird über die Strecke Elektrofahrzeug E1 - Kommunikationsverbindung K1 - Stromtankstelle T1 - zweite Kommunikationsverbindung K2 - Abrechnungsserver D1 verrechnet.

Neben der Möglichkeit zur Abrechnung des örtlich flexiblen Strombezugs ist über die Anordnung Elektrofahrzeug E1 - erste Kommunikationsverbindung K1 - Stromtankstelle T1 - zweite Kommunikationsverbindung K2 - Abrechnungsserver D1 ebenfalls erstmals die Abrechnung der Einspeisung elektrischer Energie aus dem elektrischen Speicher eines Elektrofahrzeuges E1 in das Netz des Verteilnetzbetreibers V1 oder aber direkt in das Hausnetz zum Eigenverbrauch möglich. Damit bildet das Elektrofahrzeug eine "virtuelle Versorgungsinsel", die in Zeiten hohen Energieverbrauchs das öffentliche Versorgungsnetz des Verteilnetzbetreibers V1 entlastet. Das erfindungsgemäße Verfahren stellt dies durch eine differenzierte Messung der entnommenen und eingespeisten Energie sicher, mit der Doppelzählung ausgeschlossen wird. Diese differenzierte Messung kann ggf. auch durch mehrere Messeinrichtungen (Submetering) erfolgen.

Die Einspeisung kann preislich oder zeitlich gesteuert oder aber aufgrund von Regelstrategien zur Optimierung der Netzstabilität des Verteilnetzbetreibers V1 erfolgen. Die erste Kommunikationsverbindung K1 zwischen dem Elektrofahrzeug E1 und der Stromtankstelle T1 kann beliebig gestaltet sein. So kann die Kommunikationsverbindung K1 einerseits kabelgebunden ausgestaltet sein. Dabei ist zu unterscheiden zwischen einer Kommunikation unter Benutzung des Ladekabels, wie beispielsweise wechselstrombasierte Verfahren, insbesondere PLC, vorzugsweise Powerline nach Homeplug oder anderen Standards usw. oder Digitalstrom. Die Kommunikationsverbindung K2 kann aber auch über ein separates Datenkabel erfolgen, welches parallel zum Ladekabel eingesetzt wird, beispielsweise TCP/IP über Ethernetkabel CAT5 mit RJ45-Buchsen oder als serielle Verbindung RS232, RS485 oder ein sonstiges Serielles oder Datenbus-Sytem.

Die Ausgestaltung der ersten Kommunikationsverbindung K1 als Funkverbindung F1 über RFID- oder Transpondertechnologie würde beispielsweise genügen, um die Kennnummer ID1 und ggf. den Zählerstand des Zählers Z1 auszulesen.

Als zweckmäßige Weiterentwicklung des Systems ist eine Kombination mit einem Ortungssystem O1 möglich. Die Ortung kann dazu satellitengestützt, beispielsweise über GPS, Galileo usw., mobilfunkgestützt über die Lokalisierung innerhalb der GSM-Funkzelle oder aber auch als Car-to-car-Kommunikation erfolgen, bei welcher verschiedenste Elektrofahrzeuge E1 sich über Zustandsdaten des Fahrzeugs oder über Informationen, beispielsweise bezüglich der nächsten Stromtankstelle T1 bis Tn, austauschen. Auf Basis dieser Daten ist eine Erweiterung möglich, um den bisherigen Energieverbrauch und den Ladezustand der Batterie mit der geplanten Fahrtroute zu einer rechnerischen Reichweite zu kombinieren und daraus die optimale Stromtankstelle T1 bis Tn in Abhängigkeit vom aktuellen Strombezugspreis und der jeweiligen Netzauslastung zu ermitteln.

### Bezugszeichenliste:

- E1: Mobile Speicher- und Verbrauchseinheit / Elektrofahrzeug
- T1: Ortsfeste Stromtankstelle
- O1: Ortungssystem
- D1: Datenmanagementsystem / Abrechnungsserver
- L1: Stromlieferant
- Ü1: Übertragungsnetzbetreiber
- V1: (Strom-)Verteilnetzbetreiber
- Z1, Z2: (Strom-)Zähler 1 und 2
- ID1: Kennnummer der Speicher- und Verbrauchseinheit E1
- ID2: Zählernummer des Stromzählers Z2
- F1, F2: Funkverbindung 1, 2
- K1, K2: Kommunikationsverbindung 1 und 2

## Patentansprüche

1. Verfahren zum ortsunabhängigen Strombezug und/oder zur ortsunabhängigen Stromeinspeisung einer mobilen Speicher- und Verbrauchseinheit (E1) an einer ortsfesten Stromtankstelle (T1), wobei eine Vielzahl von Stromtankstellen (T1-Tn) über Stromleitungen mindestens eines Stromverteilnetzbetreibers (V1) mit Strom von mindestens einem Stromlieferanten (L1) versorgt werden, **dadurch gekennzeichnet, dass** in folgender Reihenfolge mindestens die nachfolgenden Verfahrensschritte durchgeführt werden:
1. Herstellen einer ersten Kommunikationsverbindungen (K1) zwischen der Speicher- und Verbrauchseinheit (E1) und der Stromtankstelle (T1) bei räumlicher Annäherung der mobilen Speicher- und Verbrauchseinheit (E1) an eine ortsfeste Stromtankstelle (T1), wobei der Speicher und Verbrauchseinheit (E1) eine eindeutige Kennummer (ID1) zugeordnet ist und die Stromtankstelle (T1) einen Stromzähler (Z2) mit einer Zählernummer (ID2) trägt;
2. Entgegennahme der Kennummer (ID1) und Uebermittlung eines Datenpaketes durch die Stromtankstelle (T1), enthaltend mindestens die Kennummer (ID1) und die Zählernummer (ID2), über eine zweite Kommunikationsverbindung (K2) an einen Abrechnungsserver (D1);
3. Zuordnung der Speicher- und Verbrauchseinheit (E1) mit Hilfe der Kennummer (ID1) zu einem Stromlieferanten (L1) und Zuordnung des Stromzählers (Z2) mit Hilfe der Zählemummer (ID2) zu einem Verteilnetzbetreiber (V1) mit Hilfe der auf dem Abrechnungsserver (D1) dazu hinterlegten Daten;
4. Nach erfolgreicher Zuordnung am Abrechnungsserver Uebermittlung einer Anweisung an das Mittel zur Freischaltung an der Stromtankstelle (T1);
5. Abgabe von Strom an die Speicher- und Verbrauchseinheit (E1) oder Einspeisung von Strom von der Speicher- und Verbrauchseinheit (E1) an die Stromtankstelle (T1) über ein Ladekabel oder über eine berührungsfreie, vorzugsweise induktive oder kapazitive, Stromübertragung; und Uebermittlung der von der Speicher- und Verbrauchseinheit (E1) an der Stromtankstelle (T1) entnommenen oder eingespeisten Strommenge über die Kommunikationsverbindung (K2) an den Abrechnungsserver (D1), wobei die entnommene oder eingespeiste Strommenge durch die ortsfeste Stromtankstelle (T1) gemessen wird.

2. Verfahren nach Anspruch 1, **dadurch gekennzeichnet, dass** bei der räumlichen Annäherung der mobilen Speicher- und Verbrauchseinheit (E1) an eine ortsfeste Stromtankstelle (T1) ein automatischer Verbindungsaufbau der ersten Kommunikationsverbindung (K1) zwischen diesen beiden erfolgt.

3. Verfahren nach Anspruch 1, **dadurch gekennzeichnet, dass** die mobile Speicher- und Verbrauchseinheit (E1) ein Fahrzeug mit mindestens einem elektrischen Antrieb ist.

4. Verfahren nach Anspruch 1, **dadurch gekennzeichnet, dass** die Speicher- und Verbrauchseinheit (E1) einen Stromzähler (Z1) zur Erfassung der von der Stromtankstelle (T1) entgegengenommenen oder der an die Stromtankstelle (T1) abgegebenen Strommenge trägt.

5. Verfahren nach Anspruch 1, **dadurch gekennzeichnet, dass** die erste Kommunikationsverbindung (K1) kabelgebunden, insbesondere über das Ladekabel oder über ein separates Datenkabel, oder über Funk (F1), insbesondere WLAN, Zigbee, Bluetooth, Transpondertechnologie oder RFID, erfolgt.

6. Verfahren nach Anspruch 1, **dadurch gekennzeichnet, dass** die zweite Kommunikationsverbindung (K2) zwischen der Stromtankstelle (T1) und dem Abrechnungsserver (D1) kabelgebunden, vorzugsweise über DSL, ISDN, Festnetztelefon oder Powerline, oder über Funk (F2) erfolgt.

7. Verfahren nach Anspruch 6, **dadurch gekennzeichnet, dass** die zweite Kommunikationsverbindung (K2) über Funk (F2), vorzugsweise GSM, GPRS, UMTS, WiMAX, Funkrundsteuerung oder Paging, erfolgt.

8. Verfahren nach Anspruch 1, **dadurch gekennzeichnet, dass** mit Hilfe eines an der Speicher- und Verbrauchseinheit (E1) angebrachten Ortungssystems Daten über den Aufenthaltsort über Funk an eine Stromtankstellen (T1) oder direkt zum Abrechnungsserver (D1) übertragen werden.

9. Verfahren nach Anspruch 1, **dadurch gekennzeichnet, dass** auf dem Abrechnungsserver (D1) weiterhin Daten zu mindestens einem Übertragungsnetzbetreiber (Ü1) hinterlegt sind.

10. Verfahren nach Anspruch 1, **dadurch gekennzeichnet, dass** auf dem Abrechnungsserver (D1) weiterhin Daten zu mindestens einem Stromverteilnetzbetreibers (V1) hinterlegt sind.

11. Verfahren nach Anspruch 1, **dadurch gekennzeichnet, dass** auf dem Abrechnungsserver (D1) weiterhin Daten zu mindestens einem Stromlieferanten (L1) hinterlegt sind.

12. Verfahren nach Anspruch 1, **dadurch gekennzeichnet, dass** der Bezug und die Einspeisung von Strom durch eine oder mehrere Speicher- und Verbrauchseinheiten (E1) an einer der Stromtankstellen (T1-Tn) zeitlich und/oder preislich gesteuert und/oder aufgrund von Regelstrategien zur Optimierung der Netzstabilität des Stromverteilnetzbetreibers (V1) erfolgt.

13. Verfahren nach Anspruch 1, **dadurch gekennzeichnet, dass** über die erste und/oder die zweite Kommunikationsverbindung (K1, K2) Transaktionsdaten übermittelt werden, die bevorzugt eine vom Kunden nachgefragte oder angebotene Energiemenge bzw. Leistung betreffen.

14. Verfahren nach Anspruch 13, **dadurch gekennzeichnet, dass** die Transaktionsdaten Strompreise, Strompreis-Ober- und Untergrenzen oder Strommengen sind, denen jeweils ein bestimmter Zeitpunkt oder Zeitraum zugeordnet werden kann.

15. Verfahren nach Anspruch 13 oder 14, **dadurch gekennzeichnet, dass** die Transaktionsdaten des Kunden mit hierzu korrespondierenden Transaktionsdaten des Energieversorgers in Einklang gebracht werden und auf diese Weise Energiemengen, Zeiten und Leistungen für Energiekaufaktionen und Energieverkaufsaktionen zwischen Kunde und Energieversorger ermittelt werden.

16. Verfahren nach Anspruch 13, **dadurch gekennzeichnet, dass** die Transaktionsdaten über ein Eingabegerät an der Stromtankstelle erfasst werden können und über ein Display an der Stromtankstelle angezeigt werden können.

17. Computerprogramm zur Ausführung eines Verfahrens gemäß einem der Ansprüche 1 bis 16.

18. Datenträger mit einem Computerprogramm nach Anspruch 17.

19. System zur Durchführung eines Verfahrens gemäß einem der Ansprüche 1 bis 16 zum ortsunabhängigen Strombezug oder zur ortsunabhängigen Stromeinspeisung einer mobilen Speicher- und Verbrauchseinheit (E1) an einer ortsfesten Stromtankstelle (T1), **dadurch gekennzeichnet, dass**
- eine Vielzahl von Stromtankstellen (T1 - Tn) über Stromleitungen mindestens eines Stromverteilnetzbetreiber (V1) mit mindestens einem Stromlieferanten (L1) verbunden sind;
- die Stromtankstelle (T1) einen Stromzähler (Z2) mit einer Zählernummer (ID2) trägt;
- die Stromtankstelle (T1) mindestens ein Mittel (X) zur Entgegennahme einer Kennnummer (ID1) der Speicher- und Verbrauchseinheit (E1) besitzt;
- zwischen der Speicher- und Verbrauchseinheit (E1) und der Stromtankstelle (T1) eine erste Kommunikationsverbindung (K1) besteht;
- eine zweite Kommunikationsverbindung (K2) zwischen der Stromtankstelle (T1) und/oder der Speicher- und Verbrauchseinheit (E1) und dem Abrechnungsserver (D1) besteht;
- auf einem zentralen Abrechnungsserver (D1) in einer Datenbank mindestens Daten zu der Speicher- und Verbrauchseinheit (E1), der Kennnummer (ID1), dem Stromlieferanten (L1), dem Stromzähler (Z2), der Zählernummer (ID2) und dem Verteilnetzbetreiber (V1) hinterlegt sind und
- an der Stromtankstelle (T1) ein Mittel zu deren Freischaltung nach einer Anweisung des Abrechnungsservers (D1) vorhanden ist.

20. System nach Anspruch 19, **dadurch gekennzeichnet, dass** das Mittel (X) mindestens eine der Speicher- und Verbrauchseinheit (E1) eindeutig zugeordnete Kennnummer (ID1) über Funk oder kabelgebunden empfangen kann.

21. System nach Anspruch 20, **dadurch gekennzeichnet, dass** die eindeutig zugeordnete Kennnummer (ID1) über ein Eingabegerät vom Nutzer der Speicher- und Verbrauchseinheit (E1) erfasst wird.

22. System nach Anspruch 21, **dadurch gekennzeichnet, dass** das Eingabegerät aus einem Lesegerät besteht, und die Kennnummer ID1 auf einem portablen Datenspeichermedium, vorzugsweise einer Kreditkarte, einem Transponderchip oder einem RFID, des Nutzers der Speicher- und Verbrauchseinheit E1 gespeichert ist.

23. System nach Anspruch 20, **dadurch gekennzeichnet, dass** die Übertragung der eindeutig zugeordneten Kennummer über die Identifikationsfunktion des Digitalstromverfahrens erfolgt.

## Claims

1. Method for the location-independent power intake of and/or location-independent power feed by a mobile storage and consumption unit (E1) at a stationary electric vehicle charging station (T1), wherein a plurality of electric vehicle charging stations (T1-Tn) are supplied with power from at least one electricity supplier (L1) via power lines of at least one electrical distribution network operator (V1), **characterized in that** at least the following method steps are carried out in the following sequence:
- establishing a first communication link (K1) between the storage and consumption unit (E1) and the electric vehicle charging station (T1) when the mobile storage and consumption unit spatially approaches a stationary electric vehicle charging station (T1), a unique identification number (ID1) being allocated to the storage and consumption unit (E1) and the electric vehicle charging station (T1) having an electricity counter (Z2) with a counter number (ID2);
- reception of the identification number (ID1) and transmission by the electric vehicle charging station (T1) of a data packet containing at least the identification number (ID1) and the counter number (ID2), via a second communication link (K2) to a billing server (D1);
- allocation of the storage and consumption unit (E1) to an electricity supplier (L1) based on the identification number (ID1) and allocation of the electricity counter (Z2) to a distribution network operator (V1) based on the counter number (ID2) and based on the respective data stored on the billing server (D1);
- on successful allocation at the billing server, transmission of an instruction to the means for activation on the electric vehicle charging station (T1);
- discharging electricity to the storage and consumption unit (E1) or feeding in electricity by the storage and consumption unit (E1) to the electric vehicle charging station (T1) via a charging cable or via a contactless, preferably inductive or capacitive, transmission of electricity; and transmission by the storage and consumption unit (E1) of the quantity of electricity withdrawn from or fed in at the electric vehicle charging station (T1) to the billing server (D1) via the communication link (K2), wherein the quantity of electricity withdrawn or fed in is measured by the stationary electric vehicle charging station (T1).

2. Method according to Claim 1, **characterized in that** when the mobile storage and consumption unit (E1) spatially approaches a stationary electric vehicle charging station (T1), the first communication link (K1) between these two is automatically set up.

3. Method according to Claim 1, **characterized in that** the mobile storage and consumption unit (E1) is a vehicle with at least one electric drive unit.

4. Method according to Claim 1, **characterized in that** the storage and consumption unit (E1) has an electricity counter (Z1) for capturing the quantity of electricity withdrawn from the electric vehicle charging station (T1) or supplied to the electric vehicle charging station (T1).

5. Method according to Claim 1, **characterized in that** the first communication link (K1) is effected by means of cable, in particular via the charging cable or via a separate data cable, or via radio link (F1), and in particular WLAN, Zigbee, Bluetooth, transponder technology or RFID.

6. Method according to Claim 1, **characterized in that** the second communication link (K2) between the electric vehicle charging station (T1) and the billing server (D1) is effected by means of cable, preferably DSL, ISDN, fixed line telephone or Powerline, or by radio link (F"), and/or effected directly between the storage and consumption unit (E1) and the billing server (D1) via radio link (F3).

7. Method according to Claim 6, **characterized in that** the second communication link (K2) is effected via radio link (F2, F3), preferably GSM, GPRS, UMTS, WiMAX, radio ripple control or paging.

8. Method according to Claim 1, **characterized in that** by means of a positioning system mounted on the storage and consumption unit (E1), data on the current position can be transmitted by radio to an electric vehicle charging station (T1) or directly to the billing server (D1).

9. Method according to Claim 1, **characterized in that** data on at least one transmission network operator (Ü1) are additionally stored on the billing server (D1).

10. Method according to Claim 1, **characterized in that** data on at least one electricity network operator (V1) are additionally stored on the billing server (D1).

11. Method according to Claim 1, **characterized in that** data on at least one electricity supplier (L1) are additionally stored on the billing server (D1).

12. Method according to Claim 1, **characterized in that** the intake and the feeding in of electricity by one or more storage and consumption units (E1) at one of the electric vehicle charging stations (T1-Tn) is controlled in terms of time and/or price, and/or carried out on the basis of control strategies for optimizing the network stability of the electrical distribution network operator (V1).

13. Method according to Claim 1, **characterized in that** transaction data are transmitted via the first and/or the second communication link (K1, K2), which preferably relate to a quantity of energy or power requested or ordered by the customer.

14. Method according to Claim 13, **characterized in that** the transaction data are electricity prices, upper and lower limits of electricity prices or quantities of electricity, to each of which a certain timestamp or time period can be assigned.

15. Method according to Claim 13 or 14, **characterized in that** the transaction data of the customer are harmonized with corresponding transaction data of the energy supplier and in this way, quantities of energy, times and power levels are calculated for energy purchases and energy sales between customer and supplier.

16. Method according to Claim 13, **characterized in that** the transaction data can be captured via an input device on the electric vehicle charging station and can be displayed via a display on the electric vehicle charging station.

17. Computer program for executing a method in accordance with any one of Claims 1 to 16.

18. Data storage medium with a computer program according to Claim 17.

19. System for carrying out a method in accordance with any one of Claims 1 to 16 for the location-independent power intake or the location-independent power feeding by a mobile storage and consumption unit (E1) at a stationary electric vehicle charging station (T1), **characterised in that**
- a plurality of electric vehicle charging stations (T1-Tn) are connected to at least one supplier (L1) via power lines of at least one electrical distribution network operator (V1);
- the electric vehicle charging station (T1) has a current counter (Z2) with a counter number (ID2);
- the electric vehicle charging station (T1) has at least one means (X) for receiving an identification number (ID1) of the storage and consumption unit (E1);
- a first communication link (K1) exists between the storage and consumption unit (E1) and the electric vehicle charging station (T1);
- a second communication link (K2) exists between the electric vehicle charging station (T1) and/or the storage and consumption unit (E1) and the billing server (D1);
- in a database on a central billing server (D1), at least data are stored which relate to the storage and consumption unit (E1), the identification number (ID1), the electricity supplier (L1), the electricity counter (Z2), the counter number (ID2) and the distribution network operator (V1) and
- on the electric vehicle charging station (T1) a means is present for its activation following an instruction from the billing server (D1).

20. System according to Claim 19, **characterized in that** the means (X) can receive at least one identification number (ID1), uniquely allocated to the storage and consumption unit (E1), by cable or radio link.

21. System according to Claim 20, **characterized in that** the uniquely allocated identification number (ID1) is detected by the user of the storage and consumption unit (E1) via an input device.

22. System according to Claim 21, **characterized in that** the input device consists of a reader, and the identification number ID1 is stored on a portable data storage medium, preferably a credit card, a transponder chip or an RFID, of the user of the storage and consumption unit (E1).

23. System according to claim 20, **characterized in that** theuniquely allocated identification number is transmitted via the identification function of the digital electricity method.

## Revendications

1. Procédé pour le ravitaillement en courant indépendant du lieu et/ou pour la réinjection de courant indépendante du lieu d'une unité mobile d'accumulation et de consommation (E1) à une station-service électrique (T1) stationnaire, une pluralité de stations-service électriques (T1-Tn) étant alimentées, via des lignes de courant d'au moins un exploitant de réseau de distribution d'électricité (V1), avec du courant d'au moins un fournisseur de courant (L1), **caractérisé en ce que** l'on exécute dans l'ordre suivant au moins les étapes suivantes du procédé :
- établissement d'une première liaison de communication (K1) entre l'unité d'accumulation et de consommation (E1) et la station-service électrique (T1) lorsque l'unité mobile d'accumulation et de consommation (E1) se rapproche spatialement d'une station-service électrique stationnaire (T1), un numéro d'identification univoque (ID1) étant associé à l'unité d'accumulation et de consommation (E1) et la station-service électrique (T1) comportant un compteur de courant (Z2) avec un numéro de compteur (ID2) ;
- réception du numéro d'identification (ID1) et transmission d'un paquet de données par la station-service électrique (T1), contenant au moins le numéro d'identification (ID1) et le numéro de compteur (ID2), par l'intermédiaire d'une deuxième liaison de communication (K2), à l'attention d'un serveur de facturation (D1) ;
- association de l'unité d'accumulation et de consommation (E1) à un fournisseur de courant (L1) au moyen du numéro d'identification (ID1), et association du compteur de courant (Z2) à un exploitant de réseau de distribution (V1) au moyen du numéro de compteur (ID2), à l'aide des données déposées à cet effet sur le serveur de facturation (D1) ;
- une fois l'association effectuée au niveau du serveur de facturation, transmission d'une instruction au moyen pour l'activation à la station-service électrique (T1) ;
- livraison de courant à l'unité d'accumulation et de consommation (E1) ou bien réinjection de courant de l'unité d'accumulation et de consommation (E1) vers la station-service électrique (T1) par l'intermédiaire d'un câble de charge ou bien par l'intermédiaire d'un transfert de courant sans contact, de préférence inductif ou capacitif ; et transmission de la quantité de courant prélevée ou réinjectée par l'unité d'accumulation et de consommation (E1) à la station-service électrique (T1) concernant la quantité de courant prélevée ou réinjectée à la station-service électrique (T1), par l'intermédiaire de la liaison de communication (K2), à l'attention du serveur de facturation (D1), moyennant quoi la quantité de courant prélevée ou réinjectée est mesurée par la station-service électrique stationnaire (T1).

2. Procédé selon la revendication 1, **caractérisé en ce que**, lorsque l'unité mobile d'accumulation et de consommation (E1) se rapproche spatialement d'une station-service électrique stationnaire (T1), il s'en suit un établissement automatique d'une liaison de la première liaison de communication (K1) entre ces deux.

3. Procédé selon la revendication 1, **caractérisé en ce que** l'unité mobile d'accumulation et de consommation (E1) est un véhicule avec au moins un entraînement électrique.

4. Procédé selon la revendication 1, **caractérisé en ce que** l'unité d'accumulation et de consommation (E1) porte un compteur de courant (Z1) pour la détection de la quantité de courant reçue par la station-service électrique (T1) ou de la quantité de courant indiquée à la station-service électrique (T1).

5. Procédé selon la revendication 1, **caractérisé en ce que** la première liaison de communication (K1) s'effectue par câbles, en particulier via le câble de charge ou via un câble de données distinct, ou bien par radio (F1), en particulier WLAN, Zigbee, Bluetooth, par technologie de transpondeur ou par RFID.

6. Procédé selon la revendication 1, **caractérisé en ce que** la deuxième liaison de communication (K2) entre la station-service électrique (T1) et le serveur de facturation (D1) s'effectue par câbles, de préférence par DSL, ISDN, téléphone fixe ou Powerline, ou par radio (F") et/ou directement par radio (F3) entre l'unité d'accumulation et de consommation (E1) et le serveur de facturation (D1).

7. Procédé selon la revendication 6, **caractérisé en ce que** la deuxième liaison de communication (K2) s'effectue par radio (F2, F3), de préférence par GSM, GPRS, UMTS, WiMAX, radio-télécommande centralisée ou Paging.

8. Procédé selon la revendication 1, **caractérisé en ce que**, à l'aide d'un système de localisation disposé sur l'unité d'accumulation et de consommation (E1), des données concernant l'emplacement sont transmises par radio à une station-service électrique (T1) ou directement au serveur de facturation (D1).

9. Procédé selon la revendication 1, **caractérisé en ce que** des données concernant au moins un gestionnaire de réseau de transmission (Ü1) sont par ailleurs déposées sur le serveur de facturation (D1).

10. Procédé selon la revendication 1, **caractérisé en ce que** des données concernant au moins un exploitant de réseau électrique (V1) sont par ailleurs déposées sur le serveur de facturation (D1).

11. Procédé selon la revendication 1, **caractérisé en ce que** des données concernant au moins un fournisseur de courant (L1) sont par ailleurs déposées sur le serveur de facturation (D1).

12. Procédé selon la revendication 1, **caractérisé en ce que** le ravitaillement et la réinjection de courant par une ou plusieurs unités d'accumulation et de consommation (E1) à l'une des stations-service électriques (T1-Tn) s'effectuent de manière commandée en fonction du temps et/ou du prix et/ou sur la base de stratégies de commande pour l'optimisation de la stabilité du réseau de l'exploitant de réseau de distribution d'électricité (V1).

13. Procédé selon la revendication 1, **caractérisé en ce que** des données de transaction sont transmises par l'intermédiaire de la première et/ou deuxième liaison de communication (K1, K2), lesquelles concernent de préférence une quantité d'énergie ou prestation demandée ou prescrite par le client.

14. Procédé selon la revendication 13, **caractérisé en ce que** les données de transaction sont des prix de courant, des limites supérieures et inférieures de prix de courant ou des quantités de courant, auxquelles/auxquels on peut respectivement associer un instant déterminé ou une période déterminée.

15. Procédé selon les revendications 13 ou 14, **caractérisé en ce que** les données de transaction du client sont harmonisées avec des données de transaction du fournisseur d'énergie qui leur correspondent directement, et **en ce que** de cette manière, on détermine des quantités d'énergie, des temps et des prestations pour des actions d'achat d'énergie et des actions de vente d'énergie entre un client et un fournisseur.

16. Procédé selon la revendication 13, **caractérisé en ce que** les données de transaction peuvent être saisies via un appareil de saisie à la station-service électrique et peuvent être affichées via un afficheur à la station-service électrique.

17. Programme informatique pour la mise en oeuvre d'un procédé selon l'une des revendications 1 à 16.

18. Support de données avec un programme informatique selon la revendication 17.

19. Système pour exécuter un procédé selon l'une des revendications 1 à 16 pour le ravitaillement en courant indépendant du lieu et/ou pour la réinjection de courant indépendante du lieu d'une unité mobile d'accumulation et de consommation (E1) à une station-service électrique (T1) stationnaire, **caractérisé en ce que**
- une pluralité de stations-service électriques (T1-Tn) sont reliées par l'intermédiaire de lignes de courant d'au moins un exploitant de réseau de distribution électrique (V1) à au moins un fournisseur de courant (L1) ;
- **en ce que** la station-service électrique (T1) comporte un compteur de courant (Z2) avec un numéro de compteur (ID2) ;
- **en ce que** la station-service électrique (T1) possède au moins un moyen (X) pour recevoir un numéro d'identification (ID1) de l'unité d'accumulation et de consommation (E1) ;
- **en ce qu'**il y a une première liaison de communication (K1) entre l'unité d'accumulation et de consommation d'énergie (E1) et la station-service électrique (T1) ;
- **en ce qu'**il y a une deuxième liaison de communication (K2) entre la station-service électrique (T1) et/ou l'unité d'accumulation et de consommation (E1) et le serveur de facturation (D1) ;
- **en ce que**, sur un serveur de facturation central (D1), sont déposées dans une base de données au moins des données concernant l'unité d'accumulation et de consommation (E1), le numéro d'identification (ID1), le fournisseur de courant (L1), le compteur de courant (Z2), le numéro de compteur (ID2) et l'exploitant de réseau de distribution (V1) et
- **en ce qu'**il existe à la station-service électrique (T1) un moyen pour l'activation de celle-ci après une instruction du serveur de facturation (D1).

20. Système selon la revendication 19, **caractérisé en ce que** le moyen (X) peut réceptionner par radio ou par câbles au moins un numéro d'identification (ID1) associé de manière univoque à l'unité d'accumulation et de consommation (E1).

21. Système selon la revendication 20, **caractérisé en ce que** le numéro d'identification (ID1) associé de manière univoque est saisi, par l'intermédiaire d'un appareil de saisie, par l'utilisateur de l'unité d'accumulation et de consommation (E1).

22. Système selon la revendication 21, **caractérisé en ce que** l'appareil de saisie se compose d'un appareil de lecture et **en ce que** le numéro d'identification ID1 est enregistré sur un support de stockage de données portatif, de préférence une carte de crédit, une puce de transpondeur ou une RFID, de l'utilisateur de l'unité d'accumulation et de consommation (E1).

23. Système selon la revendication 20, **caractérisé en ce que** la transmission du numéro d'identification associé de manière univoque s'effectue par l'intermédiaire de la fonction d'identification du procédé à train d'impulsions numériques.
